(19) **Europäisches Patentamt / European Patent Office / Office européen des brevets**

(11) **EP 4 715 906 A1**

(12) **EUROPEAN PATENT APPLICATION**
published in accordance with Art. 153(4) EPC

(43) Date of publication:
25.03.2026 Bulletin 2026/13

(21) Application number: 24843513.3

(22) Date of filing: 17.07.2024

(51) International Patent Classification (IPC):
$H01M\ 4/525$ (2010.01)    $H01M\ 4/36$ (2006.01)
$H01M\ 10/052$ (2010.01)    $C01G\ 53/00$ (2025.01)
$H01M\ 4/505$ (2010.01)    $H01M\ 4/131$ (2010.01)
$H01M\ 4/02$ (2006.01)

(52) Cooperative Patent Classification (CPC):
Y02E 60/10

(86) International application number:
PCT/KR2024/010315

(87) International publication number:
WO 2025/018798 (23.01.2025 Gazette 2025/04)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 17.07.2023 KR 20230092287
27.07.2023 KR 20230098548
16.07.2024 KR 20240094050
16.07.2024 KR 20240094051

(71) Applicant: LG Energy Solution, Ltd.
Seoul 07335 (KR)

(72) Inventors:
• KIM, Jong Woo
  Daejeon 34122 (KR)
• YOO, Tae Gu
  Daejeon 34122 (KR)
• PARK, Jin Bum
  Daejeon 34122 (KR)
• YOO, Seung Su
  Daejeon 34122 (KR)
• JO, Chi Ho
  Daejeon 34122 (KR)
• PARK, Byung Chun
  Daejeon 34122 (KR)

(74) Representative: Hoffmann Eitle
Patent- und Rechtsanwälte PartmbB
Arabellastraße 30
81925 München (DE)

(54) **POSITIVE ELECTRODE ACTIVE MATERIAL, AND POSITIVE ELECTRODE AND LITHIUM SECONDARY BATTERY COMPRISING SAME**

(57) A positive electrode active material according to the present invention is a positive electrode active material including lithium composite transition metal oxide particles having a nickel content of 50 mol% to 80 mol% among all metals excluding lithium and having the form of a single particle formed of one single nodule, or a quasi-single particle, a composite of up to 30 nodules, and a coating layer formed on a surface of the lithium composite transition metal oxide particles, wherein the positive electrode active material satisfies Equation 1 below.

$$[\text{Equation 1}]$$

$$1.0 \leq P2/P1 \leq 4.0$$

In Equation 1 above, P1 is a total volume of pores having a pore diameter greater than 40 Å in the positive electrode active material, and P2 is a total volume of pores having a pore diameter of 40 Å or less in the positive electrode active material.

EP 4 715 906 A1

[FIG. 1]

**Description**

## TECHNICAL FIELD

### Cross-reference to Related Applications

This application claims the benefit of Korean Patent Application Nos. 10-2023-0092287 filed on 7/17/2023, 10-2023-0098548 filed on 7/27/2023, 10-2024-0094050 filed on 7/16/2024, and 10-2024-0094051 filed on 7/16/2024 in the Korean Intellectual Property Office, the disclosure of which is incorporated herein in its entirety by reference.

### Technical Field

The present invention relates to a positive electrode active material, and a positive electrode and a lithium secondary battery which include the same.

## BACKGROUND ART

Lithium secondary batteries are typically provided with a positive electrode, a negative electrode, a separator, and an electrolyte, and the positive electrode and the negative electrode include active materials enabling intercalation/deintercalation of lithium ions.

lithium cobalt oxide ($LiCoO_2$), lithium nickel oxide ($LiNiO_2$), lithium manganese oxide ($LiMnO_2$, $LiMnO_4$, or the like), lithium iron phosphate compound ($LiFePO_4$), and the like have been used as a positive electrode active material for lithium secondary batteries. Among those listed above, the lithium cobalt oxide has high operating voltage and excellent capacity characteristics but it is difficult to commercially apply the lithium cobalt oxide to large-capacity batteries because cobalt, which is a raw material of the lithium cobalt oxide, is expensive and unstably supplied. The lithium nickel oxide has poor structural stability, and thus is hardly provided with sufficient lifespan. Meanwhile, the lithium manganese oxide has excellent stability but comes with poor capacity. Accordingly, lithium composite transition metal oxides including at least two types of transition metals have been developed to compensate for the limitations of lithium transition metal oxides including Ni, Co, or Mn alone, and particularly, lithium nickel cobalt manganese oxides including Ni, Co, and Mn have been widely used in the field of batteries for electric vehicles.

The positive electrode active material in the form of a single particle has a smaller contact area with an electrolyte than a typical positive electrode active material in the form of a secondary particle, resulting in fewer side reactions with an electrolyte, and has excellent particle strength, resulting in less breakage of particles in the manufacture of an electrode. Therefore, when the positive electrode active material in the form of a single particle is used, there are benefits of reduced gas generation and excellent lifespan characteristics.

However, typical lithium composite transition metal oxide particles in the form of a single particle have relatively larger primary particles than typical lithium composite transition metal oxide particles in the form of a secondary particle and exhibit lower lithium mobility due to reduced interfacial area between primary particles, which serve as a diffusion path for lithium ions, resulting in low battery capacity and poor output characteristics. Hence, high-voltage operation is required to achieve high-capacity batteries.

Yet, NCM-based lithium composite transition metal oxides are known to exhibit an increase in side reactions with an electrolyte at a driving voltage of 4.35 V or more while achieving relatively stable performance at a driving voltage of 4.3 V or less, rapid degradation in battery performance due to elution of transition metal ions, and greater degradation in performance at a rising temperature.

Therefore, there is a need to develop a positive electrode active material of NCM-based lithium composite transition metal oxide in the form of a single particle or a quasi-single particle, exhibiting excellent initial efficiency and rate characteristics at a high voltage of 4.35 V or more.

## DISCLOSURE OF THE INVENTION

## TECHNICAL PROBLEM

An aspect of the present invention provides a positive electrode active material in the form of a single particle or a quasi-single particle, which exhibits excellent initial efficiency and rate characteristics at a high voltage of 4.35 V or more and enhanced gas generation performance under high-temperature storage conditions.

## TECHNICAL SOLUTION

According to an aspect of the present invention, provided is a positive electrode active material including lithium composite transition metal oxide particles having a nickel content of 50 mol% to 80 mol% among all metals excluding lithium and having the form of a single particle formed of one single nodule, or a quasi-single particle, a composite of up to 30 nodules, and a coating layer formed on a surface of the lithium composite transition metal oxide particles, wherein the positive electrode active material satisfies Equation 1 below.

$$[\text{Equation 1}]$$

$$1.0 \leq P2/P1 \leq 4.0$$

In Equation 1 above, P1 is a total volume of pores having a pore diameter greater than 40 Å in the positive electrode active material, and P2 is a total volume of pores having a pore diameter of 40 Å or less in the positive electrode active material.

The positive electrode active material may have a maximum pore diameter of 200 Å to 300 Å.

The positive electrode active material may have a total pore volume of $1.6 \times 10^{-4}$ cm$^3$/g or less.

The lithium composite transition metal oxide particles may have a composition represented by Formula 1 below.

$$[\text{Formula 1}] \qquad Li_aNi_bCo_cM^1dM^2_eO_2$$

In Formula 1 above, M$^1$ is at least one selected from the group consisting of Mn and Al, and M$^2$ is at least one selected from the group consisting of Ti, Mg, Zr, Y, Ba, Ca, Zr, Sr, W, Ta, Nb, and Mo, where $1.0 \leq a \leq 1.5$, $0.5 \leq b \leq 0.8$, $0 < c \leq 0.3$, $0 < d \leq 0.4$, and $0 \leq e \leq 0.2$.

The coating layer may include at least one coating element selected from the group consisting of Al, Ti, W, B, F, P, Mg, Ni, Co, Fe, Cr, V, Cu, Ca, Zn, Zr, Nb. Mo, Sr, Sb, Bi, Si, and S. Preferably, the coating layer may include Al and W.

The positive electrode active material may include Al in an amount of 500 ppm to 3000 ppm with respect to a total weight of the positive electrode active material, and may include W in an amount of 2000 ppm to 4000 ppm with respect to a total weight of the positive electrode active material.

The positive electrode active material may have a BET specific surface area of 0.70 cm$^2$/g to 1.00 cm$^2$/g.

The positive electrode active material may have a D$_{50}$ of 3.0 μm to 5.0 μm.

According to another aspect of the present invention, provided are a positive electrode including the positive electrode active material described above, and a lithium secondary battery including the positive electrode.

## ADVANTAGEOUS EFFECTS

A positive electrode active material according to the present invention includes a lithium composite transition metal oxide in the form of a single particle or quasi-single particle, having excellent particle strength, and thus exhibits less particle breakage during electrode manufacture and charge/discharge, suppressed side reactions with an electrolyte due to a small contact area with the electrolyte, resulting in reduced gas generation when applied to a secondary battery, and less degradation, leading to excellent high-temperature lifespan characteristics.

The present invention provides a positive electrode active material satisfying Equation 1 below.

$$[\text{Equation 1}]$$

$$1.0 \leq P2/P1 \leq 4.0$$

In Equation 1 above, P1 is a total volume of pores having a pore diameter greater than 40 Å in the positive electrode active material, and P2 is a total volume of pores having a pore diameter of 40 Å or less in the positive electrode active material.

In this case, P2 mainly indicates the pores of aggregates in which a coating material is aggregated, and P1 mainly indicates the remaining pores of the positive electrode active material. When the P2/P1 satisfies a specific range, it indicates that the coating layer is uniformly distributed on a surface of the positive electrode active material, and the content of the coating material is appropriate, making it easy to suppress surface reactions. Accordingly, battery performance may be improved through reactions between residual lithium and the coating material on the surface of the positive electrode active material, and durability may be improved by suppressing reactions between an electrolyte and the positive electrode active material during battery operation.

## BRIEF DESCRIPTION OF THE DRAWINGS

FIG. 1 is an SEM image showing a surface of a positive electrode active material prepared in Example 1 of the present invention;

FIG. 2 is an SEM image showing a surface of a positive electrode active material prepared in Comparative Example 1 of the present invention;

FIG. 3 is the result of analyzing positive electrodes manufactured in Examples and Comparative Examples of the present invention using a method of Barrett-Joyner-Halenda (BJH); and

FIG. 4 is a graph showing the amount of gas generated per storage cycle at high temperatures for electrodes manufactured in Examples and Comparative Examples of the present invention.

## MODE FOR CARRYING OUT THE INVENTION

It will be understood that words or terms used herein and claims of the present invention shall not be construed as being limited to having the meaning defined in commonly used dictionaries. It will be further understood that the words or terms should be interpreted as having meanings that are consistent with their meanings in the context of the relevant art and the technical idea of the invention, based on the principle that an inventor may properly define the meaning of the words or terms to best explain the invention.

As used herein, the term "single particle" indicates a particle consisting of a single nodule. As used herein, the term "quasi-single particle" indicates a composite particle formed of up to 30 nodules.

As used herein, the term "nodule" indicates a particle unit body constituting a single particle and a quasi-single particle, and the nodule may be a single crystal lacking any crystalline grain boundary, or may be a polycrystal in which grain boundaries are not present when observed in a field of view of $5000\times$ to $20000\times$ using a scanning electron microscope (SEM). As used herein, an average particle diameter of the nodule may be determined as an arithmetic average value of particle diameters of each nodule measured using scanning electron microscope (SEM).

As used herein, the term "secondary particle" indicates a particle formed by aggregation of a plurality several tens to several hundreds of primary particles. More specifically, the secondary particle is an aggregate of 50 primary particles or more.

As used herein, when the term "particle" is described, any one or all of a single particle, a quasi-single particle, a primary particle, a nodule, and a secondary particle may be encompassed.

As used herein, "$D_{50}$" indicates a particle size at 50% in cumulative volume particle size distribution of a positive electrode active material. The $D_{50}$ may be measured using a laser diffraction method. For example, the average particle diameter D50 may be measured in a way that the positive electrode active material powder is dispersed in a dispersion medium, the dispersion medium is introduced into a commercial laser diffraction particle size measurement instrument (e.g., Microtrac MT 3000) and irradiated with ultrasonic waves having a frequency of about 28 kHz and an output of 60 W to obtain a volume accumulated particle size distribution graph, and the particle diameter at 50% of the volume accumulation is calculated.

As used herein, the term "driving voltage" indicates a voltage at which lithium ions are deintercalated when a voltage is applied, and may preferably indicate a voltage at which the deintercalated lithium ions move to a negative electrode.

Herein, the "BET specific surface area" is calculated from nitrogen adsorption isotherm at liquid nitrogen temperature (77 K) using BELSORP-mino II from BEL Japan, and the specific surface area may be calculated using a Brunauer-Emmett-Teller (BET) multi-point method.

Herein, the "pore volume" may be measured by a calculation formula according to a Barrett-Joyer-Halenda (BJH) method through nitrogen adsorption. The pore volume is calculated using a Barrett-Joyer-Halenda (BJH) plot for pores having a diameter of 8.7 Å to 250 Å (i.e., 0.87 nm to 25 nm).

### Positive electrode active material

Hereinafter, a positive electrode active material according to the present invention will be described.

The positive electrode active material according to the present invention includes (1) lithium composite transition metal oxide particles in the form of a single particle or a quasi-single particle, and (2) a coating layer formed on a surface of the lithium composite transition metal oxide particle.

Specifically, the positive electrode active material satisfies Equation 1 below.

$$[\text{Equation 1}]$$

$$1.0 \leq P2/P1 \leq 4.0$$

P1 is a total volume of pores having a pore diameter greater than 40 Å in the positive electrode active material, and P2 is a total volume of pores having a pore diameter of 40 Å or less in the positive electrode active material.

**(1) Lithium composite transition metal oxide particles**

The lithium composite transition metal oxide particles are in the form of a single particle consisting of one nodule and/or a quasi-single particle which is a composite of up to 30 nodules, preferably 2 to 20 nodules, more preferably 2 to 10 nodules. Since the lithium composite transition metal oxide in the form of a single particle and/or a quasi-single particle has higher particle strength than a typical lithium composite transition metal oxide in the form of a secondary particle in which several tens to several hundreds of primary particles are aggregated, particles are less broken in rolling.

In addition, since the lithium composite transition metal oxide in the form of a single particle or a quasi-single particle according to the present invention has a small number of sub-parts (i.e. nodules) constituting particles, changes resulting from the volume expansion/contraction of primary particles during charging and discharging are small, and accordingly, the generation of cracks inside the particles is substantially reduced.

Meanwhile, the lithium composite transition metal oxide particles may have a composition in which the content of nickel among all metals excluding lithium is 50 mol% to 80 mol%, preferably 50 mol% to 75 mol%, more preferably 55 mol% to 75 mol%, or 55 mol% to 70 mol%.

More specifically, the lithium composite transition metal oxide particles may have a composition represented by Formula 1 below.

[Formula 1]  $\quad\quad Li_aNi_bCo_cM^1_dM^2_eO_2$

In Formula 1 above, $M^1$ may be at least one selected from the group consisting of Mn and Al, and $M^2$ may include at least one selected from the group consisting of Ti, Mg, Zr, Y, Ba, Ca, Zr, Sr, W, Ta, Nb, and Mo. Although the $M^2$ element is not necessarily included, when an appropriate amount of the $M^2$ element is included, it may serve to promote grain growth during firing or enhance the stability of a crystal structure.

a above represents a mole ratio of lithium in lithium composite transition metal oxide, where $1.0 \leq a \leq 1.5$, $1.0 \leq a < 1.5$, or $1.0 \leq a \leq 1.2$. When the mole ratio of lithium satisfies the above range, a stable layered crystal structure may be formed.

When the range is satisfied, a stable layered crystal structure may be formed.

b above represents a mole ratio of nickel among all metals excluding lithium in lithium composite transition metal oxide particles, where $0.5 \leq b \leq 0.8$, $0.50 \leq b \leq 0.75$, $0.55 \leq b \leq 0.70$, or $0.55 \leq b \leq 0.65$. Since a higher nickel content among transition metals enables a higher capacity, a nickel content of 0.5 or greater is more favorable for achieving a high capacity.

c above represents a mole ratio of cobalt among all metals excluding lithium in lithium nickel-based oxide, where $0 < c \leq 0.3$, $0 < c \leq 0.25$, $0 < c \leq 0.2$, $0 < c \leq 0.15$, or $0 < c \leq 0.1$. When the molar ratio of cobalt satisfies the above range, good resistance characteristics and output characteristics are achievable.

d above represents a mole ratio of manganese among all metals excluding lithium in lithium nickel-based oxide, where $0 < d \leq 0.4$, $0.1 \leq d \leq 0.4$, $0.15 \leq d \leq 0.4$, or $0.2 < d \leq 0.4$. When the molar ratio of manganese satisfies the above range, a positive electrode active material may show excellent structural stability.

e above represents a mole ratio of $M^2$ element among all metals excluding lithium in lithium composite transition metal oxide, where $0 \leq e \leq 0.2$, $0 \leq e \leq 0.15$, or $0 \leq e \leq 0.1$ When an appropriate amount of the $M^1$ is included, it may serve to promote particle growth during firing or enhance crystal structure stability.

Yet, NCM-based lithium composite transition metal oxides are known to exhibit an increase in side reactions with an electrolyte at a driving voltage of 4.35 V or more while achieving relatively stable performance at a driving voltage of 4.3 V or less, rapid degradation in battery performance due to elution of transition metal ions, and greater degradation in performance at a rising temperature.

Accordingly, the inventors of the present invention have devised a new parameter to select a positive electrode active material that may be stably operated at a high voltage of 4.35 V or more, and have specifically identified that the positive electrode active material, when satisfying Equation 1 below, contributes to improving battery performance by including positive electrode active material particles in an optimal state.

[Equation 1]

$$1.0 \leq P2/P1 \leq 4.0$$

In Equation 1 above, P1 is a total volume of pores having a pore diameter greater than 40 Å in the positive electrode active material, and P2 is a total volume of pores having a pore diameter of 40 Å or less in the positive electrode active material. Preferably, the positive electrode active material may have a P2/P1 value of 1.0 to 3.5, more preferably 1.0 to 3.2.

When the P2/P1 value is greater than 4.0, it indicates a state in which the porosity of the aggregates in the coating layer is higher than that of the positive electrode active material itself, and thus the coating layer is not uniformly distributed on a surface of the positive electrode active material, forming an aggregate in which a large amount of the coating material is clumped together, and this indicates that the total volume of pores with small diameters is greater than the porosity of the positive electrode active material itself. When the coating material is not uniformly distributed on the surface of the positive electrode active material, there is no effect of improving performance through reactions between residual lithium on the surface of the positive electrode active material and the coating material, and surface side reactions between an electrolyte and the positive electrode active material are hardly suppressed, resulting in reduced durability due to a large amount of gas generation.

In addition, when the P2/P1 value is less than 1.0, the porosity of aggregates in the coating layer is lower than that of the positive electrode active material itself, or the coating material content is excessively low, resulting in a reduced ability of the coating layer to uniformly cover the surface of the positive electrode active material. this indicates that the total volume of pores with small diameters is lower than the porosity of the positive electrode active material itself. In this case, the surface reactions of the positive electrode active material are hardly suppressed, resulting in reduced durability due to an increase in gas generation. That is, when the above range is satisfied, the coating layer is uniformly distributed on the surface of the positive electrode active material, and the surface reactions of the positive electrode active material are easily suppressed, resulting in excellent initial efficiency, rate characteristics, and high-temperature storage characteristics of batteries.

Meanwhile, in the case of Equation 1 where the pores within the positive electrode active material are divided into those with a diameter greater than 40 Å and those with a diameter of 40 Å or less, and the sum of the volumes of each type of pore is used as a factor, the reference value of 40 Å may be a unique value that may clearly indicate the uniformity of coating. For example, lithium composite transition metal oxide particles in the form of a single particle or a quasi-single particle typically have a larger particle size than a coating material, and thus the pore diameter in the form of a single particle or a quasi-single particle is relatively greater than that in coating materials, with the pore diameter mostly exceeding 40 Å. Similarly, coating materials typically have smaller particle sizes, and the pore diameter in a single coating material or in an aggregate formed by coating materials is smaller than the pore diameter in the form of a single particle or a quasi-single particle, with the pore diameter mostly 40 Å or less. That is, in the case of Equation 1 of the present invention, one particular aspect is that the dividing of pore diameters into those in the coating material or coating material aggregate and those in the lithium composite transition metal oxide in the form of a single particle or a quasi-single particle, with respect to 40 Å, more clearly indicates the uniformity of coating.

Meanwhile, the sum of the volumes of pores having a pore diameter exceeding 40 Å (P1) in the positive electrode active material satisfying the P2/P1 range described above and the sum of the volumes of pores having a pore diameter of 40 Å or less (P2) in the positive electrode active material may be controlled through various methods, but preferably, it may be achieved by controlling the Ni content in lithium nickel-based oxide particles, the composition of lithium nickel-based oxide particles, the temperature and/or time conditions during firing of positive electrode active material precursors and lithium sources, the firing temperature and/or time during forming a coating layer on oxide particles, the content and/or composition of coating elements, and the grinding conditions of positive electrode active material powder.

The positive electrode active material according to the present invention may have a maximum pore diameter of 200 Å to 300 Å. The positive electrode active material according to the present invention may have a maximum pore diameter of preferably 210 Å to 290 Å, and more preferably 220 Å to 280 Å. When the above range is satisfied, it may be desirable in that the issue of excessive gas generation within cells may be prevented due to reduced breakage of active material particles within an electrode.

The positive electrode active material according to the present invention may have a total pore volume of $1.6 \times 10^{-4}$ cm$^3$/g or less. The positive electrode active material according to the present invention may have a total pore volume of preferably $0.1 \times 10^{-4}$ cm$^3$/g to $1.6 \times 10^{-4}$ cm$^3$/g, and more preferably $0.5 \times 10^{-4}$ cm$^3$/g to $1.4 \times 10^{-4}$ cm$^3$/g. When the above range is satisfied, it may be desirable in that the issue of excessive gas generation within cells may be prevented due to reduced breakage of active material particles within an electrode.

**(2) Coating layer**

The positive electrode active material according to the present invention includes a coating layer formed on a surface of the lithium composite transition metal oxide particles in the form of a single particle or a quasi-single particle.

Ni-based positive electrode active materials have a higher nickel content among transition metals constituting the positive electrode active material, compared to other transition metals, resulting in high capacity, but have a limitation of structural instability due to unstable $Ni^{3+}$ and $Ni^{4+}$ ions present on a surface of the positive electrode active material. To overcome this structural instability, various technologies for modifying the positive electrode active material surface are being studied.

The positive electrode active material according to the present invention may include a coating layer containing at least one selected from the group consisting of Al, Ti, W, B, F, P, Mg, Ni, Co, Fe, Cr, V, Cu, Ca, Zn, Zr, Nb. Mo, Sr, Sb, Bi, Si, and S as a coating element.

Preferably, the coating layer may include Al and W as a coating element. The coating layer, when containing Al and W, may exhibit excellent high-temperature lifespan characteristics compared to a case where only each coating element is contained.

In this case, the positive electrode active material according to the present invention may include Al in an amount of 500 ppm to 3000 ppm with respect to a total weight of the positive electrode active material. The Al may be included in an amount of preferably 1000 ppm to 2500 ppm, and more preferably 1000 ppm to 2000 ppm, with respect to a total weight of the positive electrode active material.

The positive electrode active material according to the present invention may include W in an amount of 2000 ppm to 4000 ppm with respect to a total weight of the positive electrode active material. W may be included in an amount of preferably 2000 ppm to 3500 ppm, and more preferably 2000 ppm to 3000 ppm, with respect to a total weight of the positive electrode active material.

When the weight of the above Al or W satisfies the numerical range described above, surface side reactions between the positive electrode active material and an electrolyte for battery operation at high voltage may be suppressed.

Meanwhile, the positive electrode active material according to the present invention may have a BET specific surface area of 0.70 $m^2$/g to 1.00 $m^2$/g, preferably 0.75 $m^2$/g to 1.00 $m^2$/g, and more preferably 0.80 $m^2$/g to 0.95 $m^2$/g. When the surface coating of the positive electrode active material is uniformly applied, the BET specific surface area may decrease compared to before the coating. The positive electrode active material having a BET specific surface area exceeding 1.00 $m^2$/g indicates that the porosity of aggregates in the coating layer is greater than that of the positive electrode active material itself, and the coating layer is not uniformly distributed on the surface of the positive electrode active material and is formed as a large amount of aggregates. As such, when the coating material is not uniformly distributed on the surface of the positive electrode active material, there is no performance improvement through reactions between residual lithium on the surface of the positive electrode active material and the coating material, and durability is reduced due to unsuppressed surface side reactions between the positive electrode active material and an electrolyte.

Meanwhile, the positive electrode active material according to the present invention may have a $D_{50}$ of 3.0 $\mu$m to 5.0 $\mu$m, preferably 3.2 $\mu$m to 5.0 $\mu$m, and more preferably 3.5 $\mu$m to 4.8 um. When the positive electrode active material has a $D_{30}$ of less than 3.0 $\mu$m, an active material layer is hardly formed during electrode manufacturing, electrolyte impregnation is degraded, resulting in reduced electrochemical properties, and when the positive electrode active material has a $D_{50}$ of greater than 5.0 $\mu$m, lithium mobility is reduced, resulting in increased resistance, and output characteristics are degraded.

**Positive electrode**

A positive electrode according to the present invention includes the positive electrode active material according to the present invention described above. Specifically, the positive electrode includes a positive electrode current collector and a positive electrode active material layer formed on the positive electrode current collector, and the positive electrode active material layer includes the positive electrode active material according to the present invention. Since the positive electrode active material has been described above, the detailed description thereof will be skipped, and hereinafter, the other components will only be described.

The positive electrode current collector may include a highly conductive metal and is not particularly limited as long as the positive electrode active material layer easily adheres thereto and the positive electrode current collector has no reactivity in the voltage range of a battery. As the positive electrode current collector, for example, stainless steel, aluminum, nickel, titanium, thermally treated carbon, aluminum or stainless steel whose surface has been treated with carbon, nickel, titanium, silver, or the like may be used. In addition, the positive electrode current collector may typically have a thickness of 3 $\mu$m to 500 $\mu$m, and fine irregularities may be formed on a surface of the current collector to improve the adhesion of a positive electrode active material. For example, the positive electrode current collector may be used in various forms such as a film, a sheet, a foil, a net, a porous body, a foam body, and a non-woven fabric body.

The positive electrode active material layer may optionally include a conductive material and a binder in addition to the positive electrode active material, as necessary.

In this case, the positive electrode active material may be included in an amount of 80 wt% to 99 wt%, more specifically 90 wt% to 98 wt%, with respect to the total weight of the positive electrode active material layer.

The conductive material is used to impart conductivity to an electrode, and any conductive material may be used without particular limitation as long as it has electron conductivity without causing a chemical change in a battery to be constituted. Specific examples thereof may include graphite such as natural graphite or artificial graphite; a carbon-based material such as carbon black, acetylene black, Ketjen black, channel black, furnace black, lamp black, thermal black, and carbon fibers; metal powder or metal fiber such as copper, nickel, aluminum, and silver; conductive tubes such as carbon nanotubes; a conductive whisker such as a zinc oxide whisker and a potassium titanate whisker; a conductive metal oxide such as a titanium oxide; or a conductive polymer such as a polyphenylene derivative, and any one thereof or a mixture of two or more thereof may be used. The conductive material may be included in an amount of 0.01 wt% to 10 wt%, preferably 0.1 wt% to 9 wt%, more preferably 0.1 wt% to 5 wt%, with respect to the total weight of the positive electrode active material layer.

The binder serves to improve the bonding between positive electrode active material particles and the adhesion between the positive electrode active material and the current collector. Specific examples thereof may include polyvinylidene fluoride (PVDF), a polyvinylidene fluoride-hexafluoropropylene copolymer (PVDF-co-HFP), polyvinyl alcohol, polyacrylonitrile, polymethymethaxrylate, carboxymethyl cellulose (CMC), starch, hydroxypropyl cellulose, regenerated cellulose, polyvinylpyrrolidone, polytetrafluoroethylene, polyethylene, polypropylene, an ethylene-propylene-diene polymer (EPDM), a sulfonated EPDM, styrene-butadiene rubber (SBR), fluorine rubber, polyacrylic acid, and a polymer obtained by substituting hydrogen of the above materials with Li, Na, or Ca, or various copolymers, and any one thereof or a mixture of two or more thereof may be used. The binder may be included in an amount of 1 wt% to 30 wt%, preferably 1 wt% to 20 wt%, more preferably 1 wt% to 10 wt%, with respect to the total weight of the positive electrode active material layer.

The positive electrode may be prepared according to a typical method of preparing a positive electrode, except that the positive electrode active material described above is used. Specifically, a positive electrode slurry composition prepared by dissolving or dispersing the positive electrode active material and, if necessary, optionally dissolving or dispersing a binder, a conductive material, and a dispersant in a solvent, is applied onto the positive electrode current collector, and then dried and rolled to prepare the positive electrode.

The solvent may be a solvent commonly used in the art, and may be dimethyl sulfoxide (DMSO), isopropyl alcohol, N-methylpyrrolidone (NMP), dimethyl formamide (DMF), acetone, water, or the like, and any one thereof or a mixture of two or more thereof may be used. The amount of the solvent to be used is sufficient if the solvent may dissolve or disperse the positive electrode active material, the conductive material, the binder, and the dispersant in consideration of the applying thickness of the slurry and preparation yield, and thereafter, have a viscosity which may exhibit excellent thickness uniformity upon application for the preparation of the positive electrode.

In addition, in another method, the positive electrode may be prepared by casting the positive electrode slurry composition on a separate support and then laminating a film separated from the support on the positive electrode current collector.

## Lithium secondary battery

Next, a lithium secondary battery according to the present invention will be described.

Specifically, the lithium secondary battery includes a positive electrode, a negative electrode positioned to face the positive electrode, a separator sandwiched between the positive electrode and the negative electrode, and an electrolyte. The positive electrode is the same as that described above, and thus, a detailed description thereof will be skipped, and hereinafter, other components will only be described.

In addition, the lithium secondary battery may optionally further include a battery case for accommodating an electrode assembly composed of the positive electrode, the negative electrode, and the separator, and a sealing member for sealing the battery case.

In the lithium secondary battery, the negative electrode includes a negative electrode current collector and a negative electrode active material layer positioned on the negative electrode current collector.

The negative electrode current collector is not particularly limited as long as it has a high conductivity without causing chemical changes in batteries. For example, copper, stainless steel, aluminum, nickel, titanium, heat treated carbon, copper or stainless steel that is surface-treated with one of carbon, nickel, titanium, silver, and the like, an aluminum-cadmium alloy, and the like may be used. In addition, the negative electrode current collector may typically have a thickness of 3 $\mu$m to 500 $\mu$m, and as in the case of the positive electrode current collector, fine irregularities may be formed on a surface of the negative electrode current collector to improve the adhesion of the negative electrode active material. For example, the negative electrode current collector may be used in various forms such as a film, a sheet, a foil, a net, a porous body, a foam body, and a non-woven fabric body.

The negative electrode active material layer optionally includes a binder and a conductive material in addition to the negative electrode active material.

A compound capable of reversibly intercalating and deintercalating lithium may be used as the negative electrode active material. Specific examples of the negative electrode active material may be a carbonaceous material such as artificial graphite, natural graphite, graphitized carbon fibers, and amorphous carbon; a metallic compound alloyable with lithium such as silicon (Si), aluminum (Al), tin (Sn), lead (Pb), zinc (Zn), bismuth (Bi), indium (In), magnesium (Mg), gallium (Ga), cadmium (Cd), a Si alloy, a Sn alloy, or an Al alloy; a metal oxide which may be doped and dedoped with lithium such as $SiO_\beta$ ($0<\beta<2$), $SnO_2$, vanadium oxide, and lithium vanadium oxide; or a composite including the metallic compound and the carbonaceous material such as a Si-C composite or a Sn-C composite, and any one thereof or a mixture of two or more thereof may be used. In addition, a metallic lithium thin film may be used as the negative electrode active material. In addition, as a carbon material, low-crystalline carbon, high-crystalline carbon, and the like may all be used. Typical examples of the low-crystalline carbon may be soft carbon and hard carbon, and typical examples of the high-crystalline carbon may be irregular, planar, flaky, spherical, or fibrous natural graphite or artificial graphite, Kish graphite, pyrolytic carbon, mesophase pitch-based carbon fibers, meso-carbon microbeads, mesophase pitches, and high-temperature heat treated carbon such as petroleum or coal tar pitch derived cokes.

The negative electrode active material may be included in an amount of 80 wt% to 99 wt%, 82 wt% to 99 wt%, or 84 wt% to 99 wt%, with respect to the total weight of the negative electrode active material layer.

The binder is a component that assists in the binding between the conductive agent, the active material, and the current collector, and is commonly added in an amount of 0.1 wt% to 10 wt% with respect to the total weight of the negative electrode active material layer. Examples of the binder may be polyvinylidene fluoride (PVDF), polyvinyl alcohol, carboxymethyl cellulose (CMC), starch, hydroxypropyl cellulose, regenerated cellulose, polyvinylpyrrolidone, polytetrafluoroethylene, polyethylene, polypropylene, an ethylene-propylene-diene polymer (EPDM), a sulfonated-EPDM, a styrene-butadiene rubber, a nitrile-butadiene rubber, a fluorine rubber, and various copolymers thereof.

The conductive material is a component for further improving conductivity of the negative electrode active material, and may be included in an amount of 1 wt% to 30 wt%, 1 wt% to 20 wt%, or 1 wt% to 10 wt%, with respect to the total weight of the negative electrode active material layer. Such conductive material is not particularly limited as long as it has conductivity without causing chemical changes in the battery, and for example, a conductive material, such as: graphite such as natural graphite and artificial graphite; carbon black such as acetylene black, Ketjen black, channel black, furnace black, lamp black, and thermal black; conductive fibers such as carbon fibers and metal fibers; metal powder such as carbon fluoride powder, aluminum powder, and nickel powder; conductive whiskers such as zinc oxide whiskers and potassium titanate whiskers; conductive metal oxide such as titanium oxide; or polyphenylene derivatives, or the like may be used.

The negative electrode active material layer may be prepared by applying a negative electrode slurry composition, which is prepared by dissolving or dispersing a negative electrode active material and optionally a binder and a conductive material in a solvent, on a negative electrode current collector and drying the resulting product, or may be prepared by casting the negative electrode slurry composition on a separate support and then laminating a film separated from the support on the negative electrode current collector.

Meanwhile, in the lithium secondary battery, a separator is to separate the negative electrode and the positive electrode and to provide a movement path for lithium ions. Any separator may be used without particular limitation as long as it is typically used as a separator in a lithium secondary battery. Particularly, a separator having high moisture-retention ability for an electrolyte as well as low resistance to the movement of electrolyte ions is preferable. Specifically, a porous polymer film, for example, a porous polymer film prepared using a polyolefin-based polymer such as an ethylene homopolymer, a propylene homopolymer, an ethylene/butene copolymer, an ethylene/hexene copolymer, and an ethylene/methacrylate copolymer, or a laminated structure having two or more layers thereof may be used. In addition, a typical porous nonwoven fabric, for example, a nonwoven fabric formed of glass fiber having a high melting point or polyethylene terephthalate fiber may be used. Furthermore, a coated separator including a ceramic component or a polymer material may be used to secure heat resistance or mechanical strength, and a separator having a single-layer structure or a multi-layer structure may be optionally used.

In addition, the electrolyte used in the present invention may be an organic liquid electrolyte, an inorganic liquid electrolyte, a solid polymer electrolyte, a gel-type polymer electrolyte, a solid inorganic electrolyte, a molten-type inorganic electrolyte, and the like, all of which may be used in the preparation of a lithium secondary battery, but is not limited thereto.

Specifically, the electrolyte may include an organic solvent and a lithium salt.

Any organic solvent may be used without particular limitation as long as it may serve as a medium through which ions involved in an electrochemical reaction of a battery may move. Specifically, as the organic solvent, an ester-based solvent such as methyl acetate, ethyl acetate, $\gamma$-butyrolactone, and $\epsilon$-caprolactone; an ether-based solvent such as dibutyl ether or tetrahydrofuran; a ketone-based solvent such as cyclohexanone; an aromatic hydrocarbon-based solvent such as benzene and fluorobenzene; a carbonate-based solvent such as dimethyl carbonate (DMC), diethyl carbonate (DEC), methylethyl carbonate (MEC), ethylmethyl carbonate (EMC), ethylene carbonate (EC), and propylene carbonate (PC); an alcohol-based solvent such as ethyl alcohol and isopropyl alcohol; nitriles such as R-CN (where R is a linear, branched, or cyclic C2 to C20 hydrocarbon group and may include a double-bond aromatic ring or ether bond); amides such as dimethylformamide; dioxolanes such as 1,3-dioxolane; or sulfolanes may be used. Among these solvents, a carbonate-based solvent is preferable, and a mixture of a cyclic carbonate (e.g., ethylene carbonate or propylene carbonate) having a high ionic conductivity and a high dielectric constant and a linear carbonate-based compound having a low viscosity (e.g., ethylmethyl carbonate, dimethyl carbonate, or diethyl carbonate), the mixture which may increase charging/discharging performance of a battery, is more preferable.

Any compound may be used as the lithium salt without particular limitation as long as it is a compound capable of providing lithium ions used in lithium secondary batteries. To be specific, an anion of the lithium salt may be at least one selected from the group consisting of $F^-$, $Cl^-$, $Br^-$, $I^-$, $NO_3^-$, $N(CN)_2^-$, $BF_4^-$, $CF_3CF_2SO_3^-$, $(CF_3SO_2)_2N^-$, $(FSO_2)_2N^-$, $CF_3CF_2(CF_3)_2CO^-$, $(CF_3SO_2)_2CH^-$, $(SF_3)_3C^-$, $(CF_3SO_2)_3C^-$, $CF_3(CF_2)_7SO_3^-$, $CF_3CO_2^-$, $CH_3CO_2^-$, $SCN^-$, and $(CF_3CF_2SO_2)_2N^-$, and as the lithium salt, $LiPF_6$, $LiClO_4$ $LiAsF_6$, $LiBF_4$, $LiSbF_6$, $LiAlO_4$, $LiAlCl_4$, $LiCF_3SO_3$, $LiC_4F_9SO_3$, $LiN(C_2F_5SO_3)_2$, $LiN(C_2F_5SO_2)_2$, $LiN(CF_3SO_2)_2$, LiCl, LiI, or $LiB(C_2O_4)_2$ may be used. The lithium salt may be used in a concentration range of 0.1 M to 4.0 M, preferably 0.5 M to 3.0 M, more preferably 1.0 M to 2.0 M. When the concentration of the lithium salt is included within the above range, the electrolyte has suitable conductivity and viscosity and may thus exhibit excellent performance, and lithium ions may effectively move.

In addition to the above-described electrolyte components, one or more types of additives such as a haloalkylene carbonate-based compound such as difluoroethylene carbonate, pyridine, triethylphosphite, triethanolamine, a cyclic ether, ethylenediamine, n-glyme, hexaphosphoric triamide, a nitrobenzene derivative, sulfur, a quinone imine dye, an N-substituted oxazolidinone, an N,N-substituted imidazolidine, an ethylene glycol dialkyl ether, an ammonium salt, pyrrole, 2-methoxyethanol, and aluminum trichloride may be further included in the electrolyte for the purpose of enhancing the lifespan characteristics of batteries, suppressing reduction in battery capacity, enhancing the discharge capacity of batteries, and the like. In this case, the additive may be included in an amount of 0.1 wt% to 10.0 wt% with respect to a total weight of the electrolyte.

The lithium secondary battery according to the present invention as described above has excellent stability and electrochemical performance even at high voltage, and thus has a charge cut-off voltage of 4.35 V or more during operation, and may exhibit excellent high-capacity characteristics when operated at such a high voltage, compared to typical lithium secondary batteries. The lithium secondary battery according to the present invention may have a driving voltage of 2.5 V to 4.5 V, preferably 2.5 V to 4.4 V.

Meanwhile, the lithium secondary battery may have a nominal voltage of 3.68 V or greater, preferably 3.68 V to 3.80 V, and more preferably 3.69 V to 3.75 V. In this case, the nominal voltage indicates an average voltage value upon discharge of the lithium secondary battery. Since the energy density of the lithium secondary battery is calculated by the product of average voltage and average current upon discharge, energy density increases when the nominal voltage is high. Lithium secondary batteries using typical lithium nickel cobalt manganese-based oxide as a positive electrode active material generally had a charge cut-off voltage of 4.25 V, and, in this case, had a nominal voltage of 3.6 V. In contrast, increasing the charge cut-off voltage to 4.35 V or more to make the nominal voltage 3.68 V or more may be desirable in terms of achieving high energy density.

In addition, the lithium secondary battery according to the present invention as describe above stably exhibits excellent discharging capacity, output properties, and capacity retention, and thus, are useful for portable devices such as a mobile phone, a notebook computer, and a digital camera, and in the field of electric cars such as a hybrid electric vehicle (HEV).

Therefore, according to another embodiment of the present invention, a battery module including the lithium secondary battery as a unit cell, and a battery pack including the same are provided.

The battery module or the battery pack may be used as a power source of at least any one medium and large sized device of a power tool; electric cars including an electric vehicle (EV), a hybrid electric vehicle, and a plug-in hybrid electric vehicle (PHEV); or a power storage system.

Hereinafter, examples of the present invention will be described in detail in such a manner that it may easily be performed by a person with ordinary skill in the art to which the present invention pertains. The present invention may, however, be embodied in many different forms, and is not limited to Examples set forth herein.

## Examples and Comparative Examples

### Example 1

A lithium composite transition metal hydroxide precursor having a molar ratio of Ni:Co:Mn of 0.6:0.1:0.3 and a lithium raw material (LiOH) were mixed to provide the molar ratio of transition metal (Ni+Co+Mn):Li as 1:1.05, and then the mixture was fired at 940 °C for 20 hours to prepare a positive electrode active material having a composition of Li $[Ni_{0.6}Co_{0.1}Mn_{0.3}]O_2$. Then, the positive electrode active material powder was coarsely crushed using a jaw crusher, and then dry-pulverized to a level of 4 $\mu$m in a jet mill.

Thereafter, the positive electrode active material powder, $Al_2O_3$, and $WO_3$ were mixed three times using ACM equipment so that the molar ratio of the positive electrode active material powder: Al: W was 100:0.3:0.1, and then the mixture was fired at 450 °C for 5 hours to prepare a positive electrode active material powder having Al and W coating layers formed thereon.

**Comparative Example 1**

A positive electrode active material powder was prepared in the same manner as in Example 1, except that the positive electrode active material powder, $Al_2O_3$, and $WO_3$ were mixed once using ACM equipment.

**Experimental Example 1: Observation of positive electrode active material surface**

Using a scanning electron microscope device, SEM images of the positive electrode active material powders each prepared in Example 1 and Comparative Example 1 were obtained.

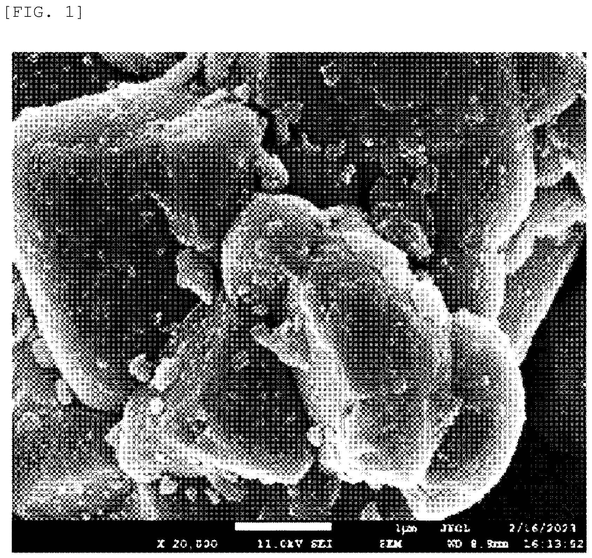

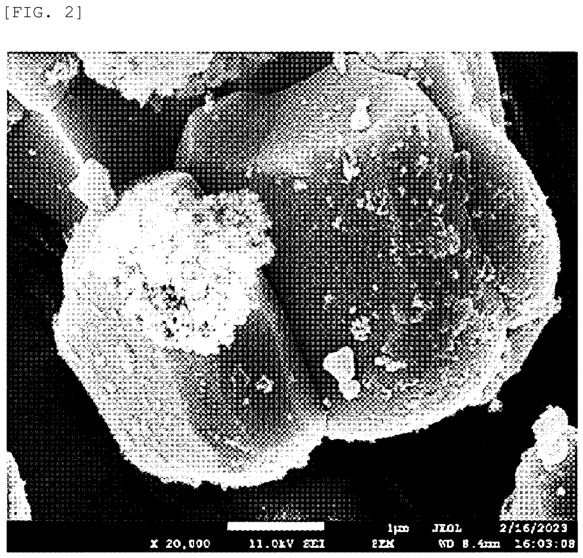

FIG. 1 is an SEM image showing a surface of the positive electrode active material prepared in Example 1 of the present invention, and FIG. 2 is an SEM image showing a surface of the positive electrode active material prepared in Comparative Example 1 of the present invention.

FIGS. 1 and 2 show that the coating layer was uniformly formed on the surface of the positive electrode active material of Example 1, but the coating layer was not uniformly formed on the surface of the positive electrode active material of Comparative Example 1 but was concentrated in a specific area.

**Experimental Example 2: Measurement of BET specific surface area and pore volume**

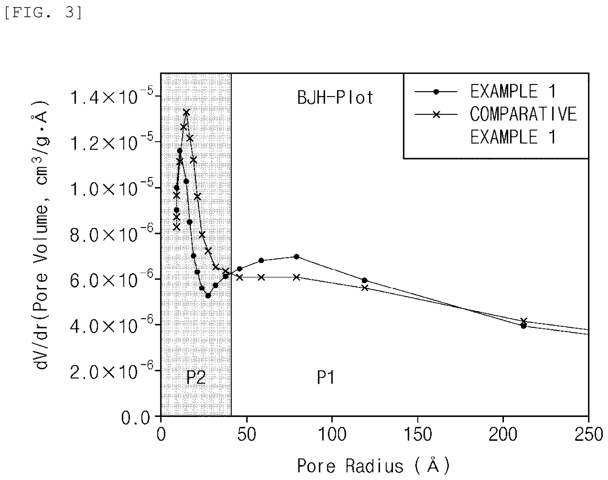

BET specific surface area, weight of coating elements (Al, W), and pore volume of the positive electrode active materials each prepared in Example 1 and Comparative Example 1 were measured and calculated. The measured and calculated values are shown in Table 1, Table 2, and FIG. 3 below.

Specifically, the BET specific surface area of the positive electrode active materials is calculated from nitrogen adsorption isotherm at liquid nitrogen temperature (77 K) using BELSORP-mino II from BEL Japan, and the specific surface area may be calculated using a Brunauer-Emmett-Teller (BET) multi-point method.

Meanwhile, the Al and W weights in the positive electrode active materials were measured using an ICP method through an ICP-OES (PerkinElmer, Optima7300DV) device after collecting 4 g of positive electrode active material powder.

Meanwhile, the pore volume of the positive electrode active materials may be measured by a calculation formula according to a Barrett-Joyer-Halenda (BJH) method through nitrogen adsorption using BELSORP-mino II from EL Japan, and the pore volume is calculated using a Barrett-Joyer-Halenda (BJH) plot for pores having a diameter of 8.7 Å to 250 Å (i.e., 0.87 nm to 25 nm). In this case, P1 is defined as a total volume of pores having a pore diameter greater than 40 Å, and P2 is defined as a total volume of pores having a pore diameter of 40 Å or less.

[Table 1]

| | Particle form | Ni content [mol%] | BET specific surface area [cm$^3$/g] | Coating element weight [ppm] |
|---|---|---|---|---|
| Example 1 | Single particle | 60 | 0.91 | Al: 1400 W: 2800 |
| Comparative Example 1 | Single particle | 60 | 1.08 | Al: 1400 W: 2800 |

[Table 2]

| | P1 (cm$^3$/g) | P2 (cm$^3$/g) | P2/P1 |
|---|---|---|---|
| Example 1 | $3.30 \times 10^{-5}$ | $1.05 \times 10^{-4}$ | 3.18 |
| Comparative Example 1 | $3.13 \times 10^{-5}$ | $1.35 \times 10^{-4}$ | 4.31 |

**Experimental Example 3: Evaluation of initial efficiency**

Initial efficiency was measured for lithium secondary battery half cells manufactured as follows using the positive electrode active materials each prepared in Example 1 and Comparative Example 1.

**<Manufacture of lithium secondary battery>**

The positive electrode active materials each prepared in Example 1 and Comparative Example 1, a conductive material (Carbon Black), and a PVDF binder were mixed at a weight ratio of 95:2:3 in N-methylpyrrolidone to prepare a positive electrode slurry. The positive electrode slurry was applied onto one surface of an aluminum current collector, dried at 160 °C, and then roll-pressed to prepare a positive electrode.

Lithium metal was used as a negative electrode, and a separator was interposed between the positive electrode and the negative electrode prepared through the method described above to manufacture an electrode assembly, and the electrode assembly was placed inside a battery case, and then an electrolyte was injected into the case to manufacture a battery cell. The electrolyte was prepared by dissolving 0.6 M concentration of $LiPF_6$ in a mixed organic solvent in which ethylene carbonate (EC), dimethyl carbonate (DMC), and ethyl methyl carbonate (EMC) were mixed in a volume of 1:2:1, and adding vinylene carbonate (VC) in an amount of 2 wt%.

Specifically, the manufactured half cells were activated (formation), and were each charged at a constant current of 0.1 C at 25 °C up to 4.4 V and then discharged at a constant current of 0.1 C up to 2.5 V. Initial charge capacity and initial discharge capacity values, and a ratio of the initial discharge capacity to the initial charge capacity are shown in Table 3 below as the initial efficiency.

[Table 3]

| | Initial charge capacity [mAh/g] | Initial discharge capacity [mAh/g] | Initial efficiency [%] |
|---|---|---|---|
| Example 1 | 215.2 | 196.0 | 91.1 |
| Comparative Example 1 | 214.7 | 195.0 | 90.8 |

Table 3 shows that the initial charge/discharge capacity and efficiency of the lithium secondary battery including the positive electrode active material of Example 1 are superior to those of Comparative Example 1.

**Experimental Example 4: Evaluation of rate characteristics**

The half-cell of the lithium secondary battery charged and discharged once in Experimental Example 3 was charged/discharged under the conditions shown in Table 4 to evaluate rate characteristics. Results are shown in Table 4 below.

[Table 4]

| | 0.33 C/0.33 C | 1.0 C/0.1 C | 2.0 C/0.1 C |
|---|---|---|---|
| Example 1 | 96.5 | 91.9 | 87.9 |
| Comparative Example 1 | 96.1 | 91.6 | 87.8 |

Table 4 shows that the rate characteristics of the lithium secondary battery including the positive electrode active material of Example 1 are superior to those of Comparative Example 1.

**Experimental Example 5: Evaluation of gas generation during high-temperature storage**

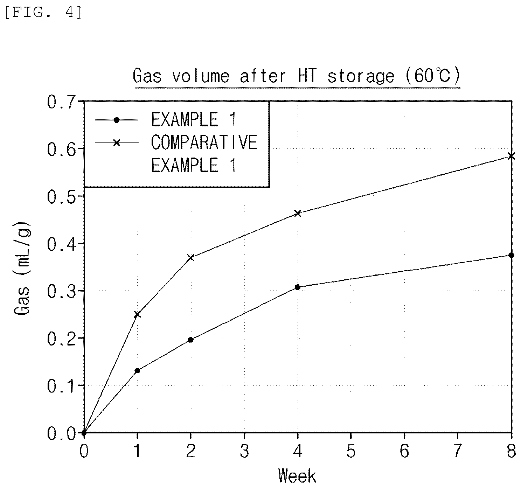

Gas generation during high-temperature storage was measured for the lithium secondary battery half cells manufactured as described above using the positive electrode active materials each prepared in Example 1 and Comparative Example 1. Specifically, gas generation per storage cycle at 60 °C for 8 weeks was measured for the manufactured half cells, and the results are shown in FIG. 4.

FIG. 4 shows that the gas generation per storage cycle at 60 °C for the lithium secondary battery including the positive electrode active material of Example 1 is significantly lower than that of Comparative Example 1.

**Claims**

1. A positive electrode active material comprising lithium composite transition metal oxide particles having a nickel content of 50 mol% to 80 mol% among all metals excluding lithium and having the form of a single particle formed of one single nodule, or a quasi-single particle, a composite of up to 30 nodules; and a coating layer formed on a surface of the lithium composite transition metal oxide particles,

wherein the positive electrode active material satisfies Equation 1 below:

$$[\text{Equation 1}]$$

$$1.0 \leq P2/P1 \leq 4.0$$

wherein in Equation 1 above, P1 is a total volume of pores having a pore diameter greater than 40 Å in the positive electrode active material, and P2 is a total volume of pores having a pore diameter of 40 Å or less in the positive electrode active material.

2. The positive electrode active material of claim 1, wherein the positive electrode active material has a maximum pore diameter of 200 Å to 300 Å.

3. The positive electrode active material of claim 1, wherein the positive electrode active material has a total pore volume of $1.6 \times 10^{-4}$ cm$^3$/g or less.

4. The positive electrode active material of claim 1, wherein the lithium composite transition metal oxide particles have a composition represented by Formula 1 below:

[Formula 1]      $Li_aNi_bCo_cM^1_dM^2_eO_2$

wherein in Formula 1 above, M$^1$ is at least one selected from the group consisting of Mn and Al, and M$^2$ is at least one selected from the group consisting of Ti, Mg, Zr, Y, Ba, Ca, Zr, Sr, W, Ta, Nb, and Mo, where $1.0 \leq a \leq 1.5$, $0.5 \leq b \leq 0.8$, $0 < c \leq 0.3$, $0 < d \leq 0.4$, and $0 \leq e \leq 0.2$.

5. The positive electrode active material of claim 1, wherein the coating layer comprises at least one coating element selected from the group consisting of Al, Ti, W, B, F, P, Mg, Ni, Co, Fe, Cr, V, Cu, Ca, Zn, Zr, Nb. Mo, Sr, Sb, Bi, Si, and S.

6. The positive electrode active material of claim 1, wherein the coating layer comprises coating elements of Al and W.

7. The positive electrode active material of claim 6, wherein the positive electrode active material comprises Al in an amount of 500 ppm to 3000 ppm with respect to a total weight of the positive electrode active material.

8. The positive electrode active material of claim 6, wherein the positive electrode active material comprises W in an amount of 2000 ppm to 4000 ppm with respect to a total weight of the positive electrode active material.

9. The positive electrode active material of claim 1, wherein the positive electrode active material has a BET specific surface area of 0.70 cm$^2$/g to 1.00 cm$^2$/g.

10. The positive electrode active material of claim 1, wherein the positive electrode active material has a D$_{50}$ of 3.0 μm to 5.0 μm.

11. A positive electrode comprising the positive electrode active material of any one of claims 1 to 10.

12. A lithium secondary battery comprising the positive electrode of claim 11.

13. The lithium secondary battery of claim 12, wherein the lithium secondary battery has a charge cut-off voltage of 4.35 V or more during operation.

[FIG. 1]

[FIG. 2]

[FIG. 3]

[FIG. 4]

Gas volume after HT storage (60℃)

## INTERNATIONAL SEARCH REPORT

| | International application No. |
|---|---|
| | **PCT/KR2024/010315** |

| A. | CLASSIFICATION OF SUBJECT MATTER |
|---|---|

**H01M 4/525**(2010.01)i; **H01M 4/36**(2006.01)i; **H01M 10/052**(2010.01)i; **C01G 53/00**(2006.01)i; **H01M 4/505**(2010.01)i; **H01M 4/131**(2010.01)i; **H01M 4/02**(2006.01)i

According to International Patent Classification (IPC) or to both national classification and IPC

| B. | FIELDS SEARCHED |
|---|---|

Minimum documentation searched (classification system followed by classification symbols)

H01M 4/525(2010.01); H01M 10/052(2010.01); H01M 4/13(2010.01); H01M 4/139(2010.01); H01M 4/36(2006.01); H01M 4/485(2010.01); H01M 4/505(2010.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 리튬 이차전지(lithium secondary battery), 양극 활물질(cathode active material), 리튬 복합전이금속 산화물(lithium composite transition metal oxide), 단입자(single particle), 코팅층(coating layer), 세공(pore)

| C. | DOCUMENTS CONSIDERED TO BE RELEVANT |
|---|---|

| Category* | Citation of document, with indication, where appropriate, of the relevant passages | Relevant to claim No. |
|---|---|---|
| Y | KR 10-2019-0117199 A (LG CHEM, LTD.) 16 October 2019 (2019-10-16)<br>See claims 1, 5, 6, 8, 13 and 14; and paragraphs [0060], [0061], [0138], [0152] and [0169]. | 1-13 |
| Y | JP 6608013 B1 (SUMITOMO CHEMICAL CO., LTD. et al.) 20 November 2019 (2019-11-20)<br>See claims 1, 3 and 6; and paragraphs [0018], [0087]-[0095] and [0196]-[0202]. | 1-13 |
| A | KR 10-2023-0081051 A (COSMO AM&T CO., LTD.) 07 June 2023 (2023-06-07)<br>See claims 1-26; and paragraphs [0181]-[0185]. | 1-13 |
| A | KR 10-2019-0022396 A (IUCF-HYU (INDUSTRY-UNIVERSITY COOPERATION FOUNDATION HANYANG UNIVERSITY)) 06 March 2019 (2019-03-06)<br>See claims 1-11. | 1-13 |

| ✓ Further documents are listed in the continuation of Box C. | ✓ See patent family annex. |
|---|---|

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **25 October 2024** | **27 October 2024** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**

International application No.

**PCT/KR2024/010315**

| C. | DOCUMENTS CONSIDERED TO BE RELEVANT | |
|---|---|---|
| Category* | Citation of document, with indication, where appropriate, of the relevant passages | Relevant to claim No. |
| A | KR 10-2016-0010630 A (IUCF-HYU (INDUSTRY-UNIVERSITY COOPERATION FOUNDATION HANYANG UNIVERSITY) et al.) 27 January 2016 (2016-01-27)<br>See claims 1-7. | 1-13 |

Form PCT/ISA/210 (second sheet) (July 2022)

## INTERNATIONAL SEARCH REPORT
### Information on patent family members

| | International application No. |
| --- | --- |
| | **PCT/KR2024/010315** |

| Patent document cited in search report | | | Publication date (day/month/year) | Patent family member(s) | | | Publication date (day/month/year) |
| --- | --- | --- | --- | --- | --- | --- | --- |
| KR | 10-2019-0117199 | A | 16 October 2019 | CN | 111902978 | A | 06 November 2020 |
| | | | | CN | 111902978 | B | 15 August 2023 |
| | | | | CN | 116364911 | A | 30 June 2023 |
| | | | | EP | 3761415 | A1 | 06 January 2021 |
| | | | | EP | 3761415 | A4 | 02 June 2021 |
| | | | | EP | 4228032 | A1 | 16 August 2023 |
| | | | | KR | 10-2398689 | B1 | 17 May 2022 |
| | | | | US | 11799066 | B2 | 24 October 2023 |
| | | | | US | 11876210 | B2 | 16 January 2024 |
| | | | | US | 2021-0020902 | A1 | 21 January 2021 |
| | | | | US | 2023-0275209 | A1 | 31 August 2023 |
| | | | | US | 2024-0194852 | A1 | 13 June 2024 |
| | | | | WO | 2019-194510 | A1 | 10 October 2019 |
| JP | 6608013 | B1 | 20 November 2019 | CN | 111295788 | A | 16 June 2020 |
| | | | | CN | 111295788 | B | 01 April 2022 |
| | | | | EP | 3678236 | A1 | 08 July 2020 |
| | | | | EP | 3678236 | A4 | 27 January 2021 |
| | | | | EP | 3678236 | B1 | 25 January 2023 |
| | | | | JP | 2020-021639 | A | 06 February 2020 |
| | | | | KR | 10-2020-0053624 | A | 18 May 2020 |
| | | | | KR | 10-2021-0027248 | A | 10 March 2021 |
| | | | | KR | 10-2266523 | B1 | 18 June 2021 |
| | | | | US | 10964945 | B2 | 30 March 2021 |
| | | | | US | 2020-0266440 | A1 | 20 August 2020 |
| | | | | WO | 2020-027187 | A1 | 06 February 2020 |
| KR | 10-2023-0081051 | A | 07 June 2023 | | None | | |
| KR | 10-2019-0022396 | A | 06 March 2019 | KR | 10-2138691 | B1 | 28 July 2020 |
| | | | | WO | 2019-039893 | A1 | 28 February 2019 |
| KR | 10-2016-0010630 | A | 27 January 2016 | CN | 104904043 | A | 09 September 2015 |
| | | | | EP | 2966711 | A1 | 13 January 2016 |
| | | | | EP | 2966711 | A4 | 31 August 2016 |
| | | | | EP | 2966711 | B1 | 22 May 2019 |
| | | | | KR | 10-1650230 | B1 | 22 August 2016 |
| | | | | KR | 10-1922698 | B1 | 30 November 2018 |
| | | | | KR | 10-2014-0099218 | A | 11 August 2014 |
| | | | | US | 2015-0357638 | A1 | 10 December 2015 |
| | | | | WO | 2014-119973 | A1 | 07 August 2014 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020230092287
- KR 1020230098548
- KR 1020240094050
- KR 1020240094051